# EUROPEAN PATENT APPLICATION

(11) **EP 4 737 165 A1**
(43) Date of publication of application: **06.05.2026**
(21) Application number: 25210332.0
(22) Date of filing: 22.10.2025
(51) Int. Cl.: B60K 1/04

(54) **BATTERY PACK MODULE VIBRATION ISOLATION**

(30) Priority: 01.11.2024 US 202418935148
(71) Applicant: Cummins, Inc., Columbus, Indiana 47201 (US)
(72) Inventor: Richards, Kieran J., West Haddon, NN6 7ET (GB)
(74) Representative: Cleveland Scott York

(57) **Abstract**

The present disclosure provides a vibration damping mounting system to mount a battery pack module (176) to a chassis of a vehicle including a top mount (230) coupled to the battery pack module; a lower mount (330, 430, 530, 630, 730) coupled to at least one of a mounting brace on a back panel of the battery pack module and an underside of the battery pack module; and a vibration damping element (350, 450, 550, 650, 750) coupled to the lower mount. The vibration damping element may be at least one of a rubber damper, a spring, a torsion bar, and an air bag damper. The vibration damping element may be controlled by passive or active damping.

## Description

### FIELD

The present disclosure relates generally to a battery pack module vibration isolation system for mounting a battery pack module on a large equipment vehicle, such as a mining truck.

### BACKGROUND

Large equipment vehicles, such as haul trucks, mining vehicles, cranes, bulldozers, etc., may require a large power source to accommodate the workload and/or sheer size of the vehicle. The large equipment vehicles may be equipped with battery packs to increase peak power output during ascending, aid in breaking, recover energy when descending, and otherwise provide power to the engine. The large equipment vehicle may be subject to rough terrain, vibrations, steep inclines/declines, and other movement during operation that causes shocks and vibrations to be transferred to the chassis of the vehicle. These shocks and vibrations may damage battery pack modules coupled to the chassis of the vehicle if not managed and/or dampened.

### SUMMARY

The present disclosure provides a vibration damping mounting system configured to mount a battery pack module to a chassis of a vehicle, including: a top mount coupled to the battery pack module; a lower mount coupled to at least one of a mounting brace on a back panel of the battery pack module and an underside of the battery pack module; and a vibration damping element coupled to the lower mount. In another aspect of the vibration damping mounting system, the lower mount includes a lower chassis mount that extends from the chassis of the vehicle, and a lower battery pack mount that extends from at least one of the mounting brace on the back panel of the battery pack module and the underside of the battery pack module. Further, each of the lower chassis mount and the lower battery pack mount includes a pivot point configured to articulate such that a position of the battery pack module changes in relation to the vehicle chassis. In yet another aspect of the vibration damping mounting system, the top mount comprises a chassis mounting pin. In another aspect of the vibration damping mounting system, the vibration damping element is one of a damper and a torsion bar. In another aspect of the vibration damping mounting system, the vibration damping element includes a spring. In another aspect of the vibration damping mounting system, the vibration damping element includes a spring and a damper. In another aspect of the vibration damping mounting system, the vibration damping element is an air bag damper. Further, the air bag damper comprises a pneumatic valve, the pneumatic valve controls a damping rate of the air bag damper.

In a further aspect of the vibration damping mounting system, the vibration damping element is a passive damping element with a fixed damping rate. In another aspect of the vibration damping mounting system, the vibration damping element is a rubber damper. Further, the rubber damper is one of a disk, a pad, a bumper, a guard, and a block. In yet a further aspect, the rubber damper is filled with viscous material.

The present disclosure also provides a vibration damping mounting system configured to mount a battery pack module to a chassis of a vehicle, including: a top mount coupled to the battery pack module; a lower mount coupled to at least one of a mounting brace on a back panel of the battery pack module and an underside of the battery pack module; a vibration damping element coupled to the lower mount; and an accelerometer module. The accelerometer module includes: an accelerometer configured to determine forces of acceleration on the battery pack module about 6 degrees of freedom on an X, Y and Z axis; an actuator configured to increase or decrease a damping rate of the vibration damping element; and a control unit configured to receive signals from the accelerometer and transmit a command to the actuator. In another aspect of the accelerometer module, the accelerometer module further includes a GPS module configured to collect GPS data. Further, the GPS data includes at least one of: a change in elevation terrain, a sudden curve in a roadway, a speed of the vehicle, and a location of the vehicle. In yet another aspect of the damping mounting system, the control unit is further configured to receive the GPS data from the GPS and create a predictive map based on the GPS data. In another aspect of the vibration damping mounting system, the control unit is positioned on the vehicle. In one aspect of the vibration damping mounting system, the control unit is positioned remotely from the vehicle. Further, the accelerometer and the actuator are positioned on the vehicle.

The present disclosure further provides a method of controlling a vibration damping system of a battery pack module using live active damping, including: transmitting an accelerometer signal from an accelerometer to a control unit; processing the accelerometer signal from the accelerometer using the control unit to determine how much vibration damping is necessary to dampen the vibration of the battery pack module; transmitting a damping rate signal from the control unit to an actuator; and adjusting a damping rate of a vibration damping element by actuating the actuator such that the damping rate of the vibration damping element damps the vibration of the battery pack module. The accelerometer transmits a signal indicating vibration along 6 degrees of freedom on an X, Y, and Z axis. In one aspect further includes transmitting GPS data to a control unit; creating a predictive map of predicted vibration of the battery pack module based on the GPS data; locating the position of the battery pack module on the predictive map; and adjusting the damping rate of the vibration damping element using the actuator based on the position of the battery pack module on the predictive map such that vibration to the battery pack module is minimized. Further, GPS data includes information related to at least one of: a change in elevation, a terrain, a sudden curve in a roadway, and a speed of the vehicle. In yet another aspect of the method, adjusting the damping rate comprises the actuator adjusting a pneumonic valve of an air bag vibration damping element to increase or decrease a damping rate of the air bag vibration damping element. In another aspect of the method, adjusting a damping rate comprises the actuator adjusting at least one of spring compression, spring rate, torsion force, and damper shock absorbance to increase or decrease a damping rate of the vibration damping element.

### BRIEF DESCRIPTION OF THE DRAWINGS

The above-mentioned and other features and advantages of this disclosure, and the manner of obtaining them, will become more apparent, and will be better understood by reference to the following description of the exemplary embodiments taken in conjunction with the accompanying drawings, wherein:
FIG. **1** is a schematic top-down illustration of an architecture arrangement of components of a mining truck;
FIG. **2** illustrates a schematic top-down illustration of an architecture arrangement of components of a mining truck;
FIG. **3** illustrates a top-down schematic illustration of a battery pack module relative to a chassis and a plurality of wheels of a mining truck with the plurality of wheels in a first configuration;
FIG. **4** illustrates a top-down schematic illustration of the battery pack module of FIG. **3** with the plurality of wheels in a second configuration;
FIG. **5A** is a perspective view of the battery pack module of the present disclosure;
FIG. **5B** is a second perspective view of the battery pack module of FIG. **5A****;**
FIG. **5C** is a third perspective view of the battery pack module of FIGS. **5A** and **5B****;**
FIG. **6** is a perspective view of lifting supports of the battery pack module of the present disclosure;
FIG. **7** is an illustration of a first embodiment of the mounting system of the present disclosure including a passive rubber vibration damping element;
FIG. **8** is an illustration of a second embodiment of the mounting system of the present disclosure including a passive damper and spring vibration damping element;
FIG. **9** is an illustration of a third embodiment of the mounting system of the present disclosure including a passive air bag damper vibration damping element;
FIG. **10** is an illustration of a fourth embodiment of the mounting system of the present disclosure including an active damper and spring vibration damping element;
FIG. **11** is an illustration of a fifth embodiment of the mounting system of the present disclosure including an active air bag damping element; and
FIG. **12** is a method of active damping used by the embodiments in FIGS. **10** and **11****.**

### DETAILED DESCRIPTION

For the purposes of promoting an understanding of the principles of the present disclosure, reference is now made to the embodiments illustrated in the drawings, which are described below. The exemplary embodiments disclosed herein are not intended to be exhaustive or to limit the disclosure to the precise form disclosed in the following detailed description. Rather, these exemplary embodiments were chosen and described so that others skilled in the art may utilize their teachings.

The terms "couples", "coupled", "coupler", and variations thereof are used to include both arrangements wherein the two or more components are in direct physical contact and arrangements wherein the two or more components are not in direct contact with each other (e.g., the components are "coupled" via at least a third component), but yet still cooperate or interact with each other.

In some instances throughout this disclosure and in the claims, numeric terminology, such as first, second, third, fourth, etc., is used in reference to various components of features. Such use is not intended to denote an ordering of the components or features. Rather, numeric terminology is used to assist the reader in identifying the components or features being referenced and should not be narrowly interpreted as providing a specific order of components or features.

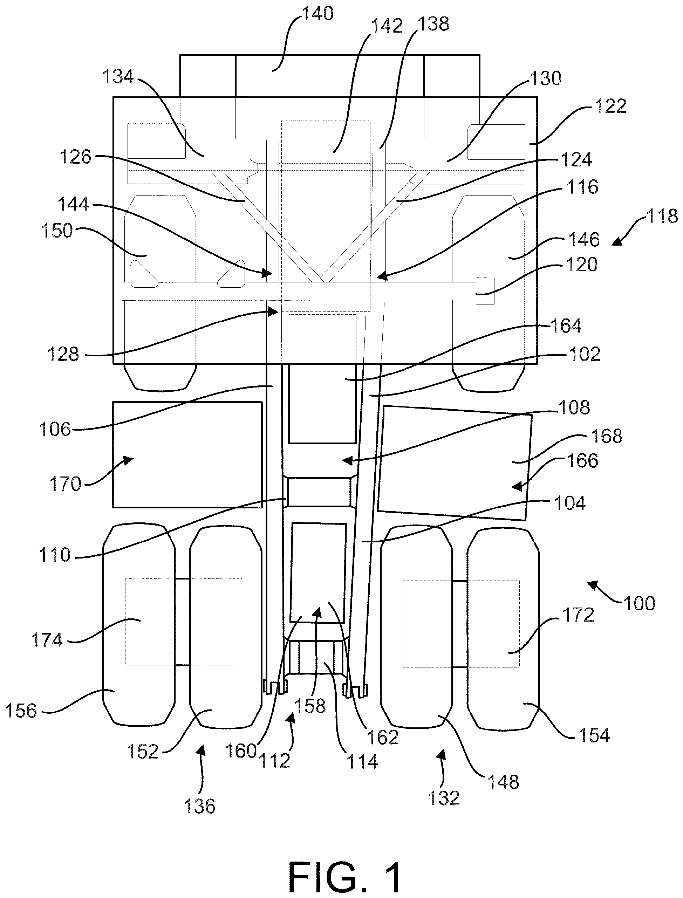

A schematic architecture of an exemplary mining truck **100** is illustrated in FIG. **1****.** As shown, mining truck **100** is generally built on and/or around chassis **102.** chassis **102** includes a first frame member **104** and a second frame member **106** extending longitudinally to at least partially define a length of mining truck **100.** First frame member **104** and second frame member **106** are spaced apart to form a space **108** therebetween, with a central crossbeam **110** extending from first frame member **104** to second frame member **106** across space **108,** generally defining a rear chassis region **112.** A rear crossbeam **114** extends from first frame member **104** to second frame member **106** across space **108** at the rear of chassis **102,** and a horse collar **116** connects first frame member **104** and second frame member **106** within a forward region **118** of chassis **102.**

A third frame member **120** extends across the top of horse collar **116** and beyond the diameter of horse collar **116** to form a support for a deck **122** as described further herein. A first supplemental frame member **124** and a second supplemental frame member **126** each extend diagonally from a central portion **128** of third frame member **120** above horse collar **116** in opposite directions so that first supplemental frame member **124** connects to a first support plate **130,** first support plate **130** also connected to first frame member **104** on a first side **132** of chassis **102,** and second supplemental frame member **126** connects to a second support plate **134,** second support plate **134** also connected to second frame member **106** on a second side **136** of chassis **102.** A forward crossbeam **138** extends from first frame member **104** to second frame member **106** in general alignment with first support plate **130** and second support plate **134.** A support extension **140** extends forward of forward crossbeam **138.** An engine **142** may be positioned within an opening **144** defined by horse collar **116.** A traction alternator and/or gearbox may be mounted rearward of engine **142** within area **164.**

Wheels **146, 148, 150,** and **152** may be mounted to chassis **102** via respective axles (not shown). For example, as shown, first wheel **146** may be mounted at a forward position in forward region **118** on first side **132** of chassis **102.** Second wheel **148** may be mounted at a rearward position in rear region **112** on first side **132** of chassis **102.** Third wheel **150** may be mounted at a forward position in forward region **118** on second side **136** of chassis **102.** Fourth wheel **152** may be mounted at a rearward position in rear region **112** on second side **136** of chassis **102.** In some embodiments, mining truck **100** may include a fifth wheel **154** mounted adjacent to second wheel **148** at a rearward position in rear region **112** on first side **132** of chassis **102.** Some embodiments may additionally include a sixth wheel **156** mounted adjacent to fourth wheel **152** at a rearward position in rear region **112** on second side **136** of chassis **102.** First wheel **146** and third wheel **150** may be mounted at a position generally corresponding to third frame member **102.** A rear region space **158** defined between first frame member **104** and second frame member **106** within rear chassis region **112,** and at least partially defined between second wheel **148** and fourth wheel **152,** may be sized and shaped to receive a vehicle subsystem **160.**

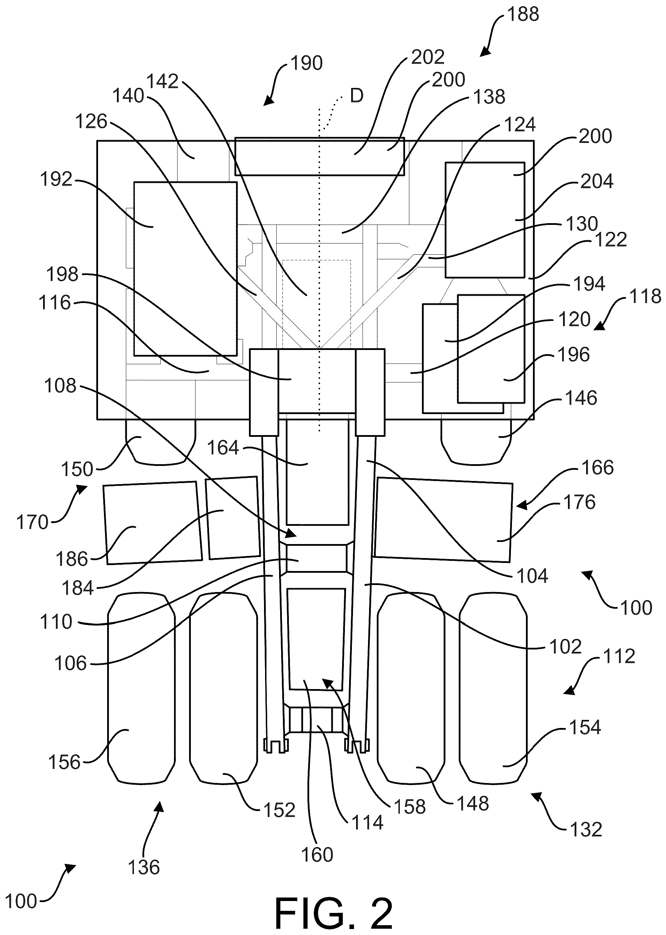

A position for a battery pack module **176** on a mining truck **100** is illustrated in FIG. **2****.** A mining truck **100,** includes a chassis **102** having first frame member **104** and second frame member **106.** First wheel **146** is mounted at a forward position in forward region **118** on first side **132** of chassis **102,** i.e., adjacent to first frame member **104.** Second wheel **148** is mounted at a rearward position in rear region **112** on first side **132** of chassis **102,** i.e., adjacent to first frame member **104,** and spaced apart from first wheel **146** to define first side saddle **166** therebetween. A battery pack module **176** may be mounted to first side **132** of chassis **102** within first side saddle **166.**

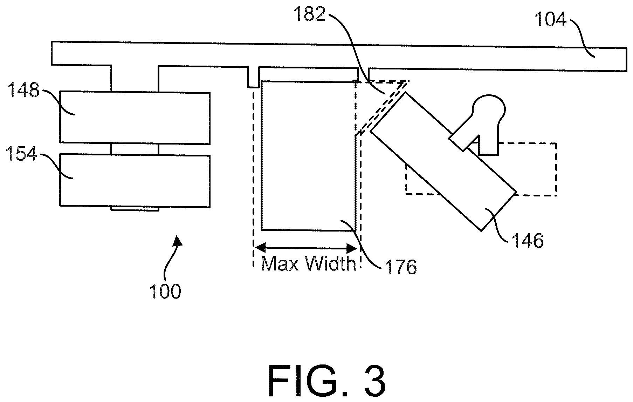

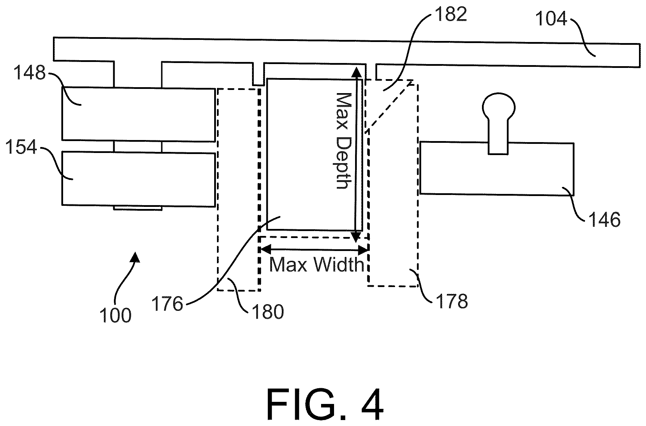

Battery pack module **176** is configured to store power for use in operation of mining truck **100.** In hybrid applications, battery pack module **176** works in cooperation with engine **142** to provide power to wheels **146, 148, 150, 152** and, in some embodiments, wheels **154, 156** for movement of mining truck **100.** Battery pack module **176** is mounted within first side saddle **166** at a position which mitigates potential contact of any one of wheels **146, 148, 150, 152, 154** (when present) and/or **156** (when present). As shown in FIGS. **3-4****,** for example, battery pack module **176** is mounted to chassis **102** in a manner that defines a forward access zone **178** defined between first wheel **146** and battery pack module **176** and a rearward access zone **180** defined between battery pack module **176** and second wheel **148.** Forward access zone **178** and rearward access zone **180** provides clearance for movement of the wheels during operation of the mining truck, and also provides clearance for an operator, mechanic, or another person to stand within the appropriate access zone **178, 180** for access to battery pack module **176** for maintenance or other required or desired tasks. A steering zone **182** may be defined adjacent to a forward inner pocket to ensure additional clearance for the steering of first wheel **146** during operation of mining truck **100** as shown in FIG. **4****.**

Mounting of battery pack module **176** within first side saddle **166** may facilitate an even balance of mining truck **100** when one or more tanks are also mounted to chassis **102** within second side saddle **170** as discussed further herein. This placement may also maximize space for battery positioning while allowing the batteries to be put in a single, unified space rather than distributed in several places over the architecture of mining truck **100.** While these benefits are acknowledged, it is also within the scope of this disclosure that battery pack module **176** and/or a plurality of battery packs may be alternately positioned, whether in a single, unified space (i.e., on deck **122,** within rear region space **158,** or another placement), or in a plurality of places throughout architecture of mining truck **100.**

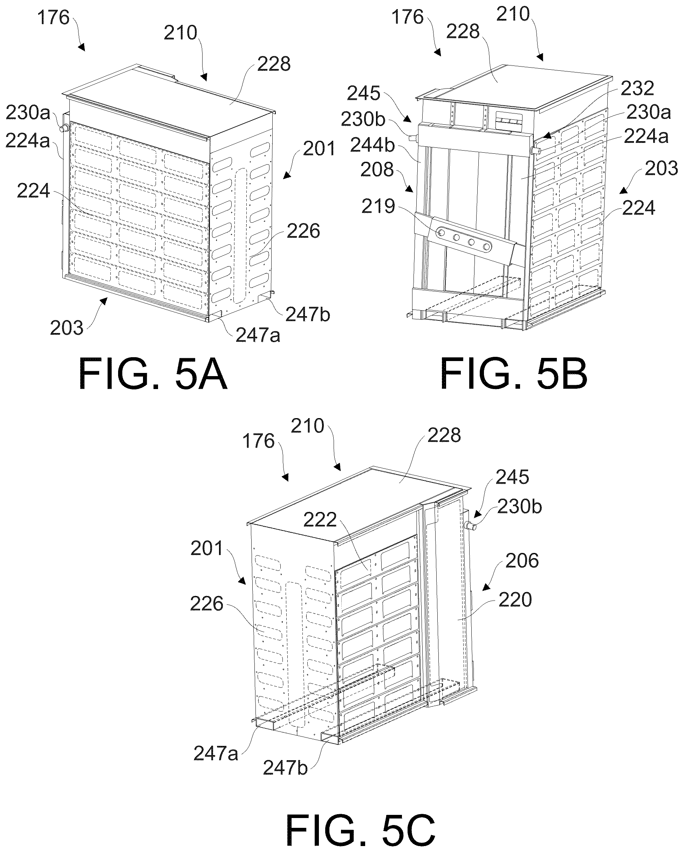

Referring to FIGS. **5A-5C****,** a battery pack module **176** of the present disclosure is illustrated. Battery pack module **176** includes a first side, or front panel **202;** a second side, or back panel **208;** a third side, or first sidewall panel **204** extending from front panel **202** to back panel **208;** a fourth side, or second sidewall panel **206** extending from front panel **202** to back panel **208;** and a fifth side, or top panel **210.** Each panel of battery pack module **176** may have at least one service access, such as a door, portal, flap, etc., to allow access to the inside of the battery pack module **176** while the module is mounted to the truck **100** as described further herein.

Battery pack module **176** includes a mounting brace **219** coupled to back panel **208.** Mounting brace **219** is configured to couple to a lower mount, as shown in FIG. **5B** and discussed further below.

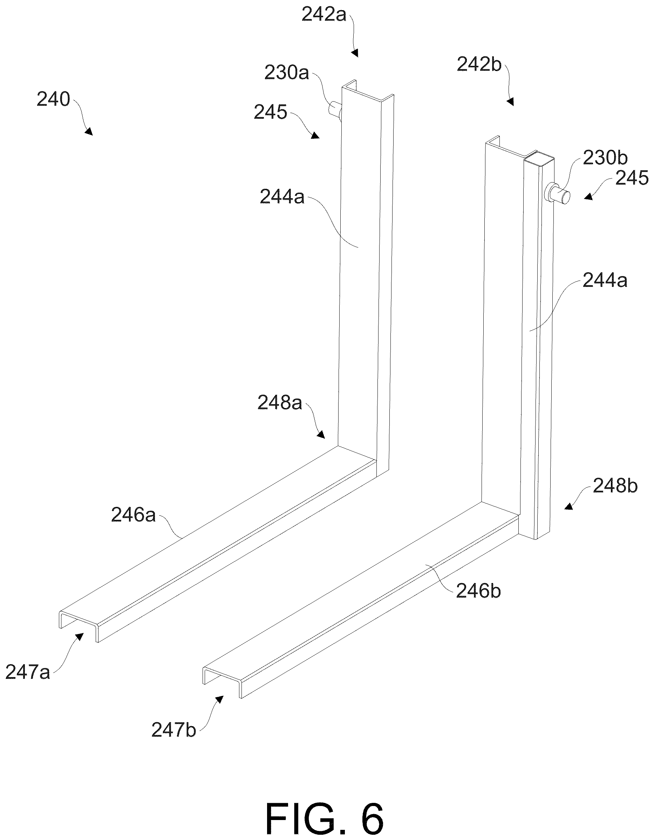

Battery pack module **176** may be mounted onto truck **100** in first side saddle **166** using a forklift or other lifting device. As shown in FIG. **6****,** lifting supports **240** may include a first support beam **242a** and a second support beam **242b.** In one embodiment, support beams **242a, 242b** may be shaped to accommodate the forklift forks and spaced apart a distance that is the same as the distance the forklift forks are spaced apart. Support beams **242a, 242b** each include a vertical portion **244a, 244b** and a horizontal portion **246a, 246b.** The horizontal portions **246a, 246b** may each include an opening **247** configured to receive forklift forks or another lifting component of lifting equipment; in other words, openings **247** are sized and shaped to receive the forklift forks. Openings **247** may form pockets within horizontal portions **246a, 246b,** and/or may be open toward the bottom of horizontal portions **246a, 246b** to facilitate reception of forklift forks or other lifting tools. Support beams **242a, 242b** may be spaced apart a distance which corresponds with forklift forks to facilitate reception of the forklift forks. Support beams **242a, 242b** may be "L" shaped, or any other shape, such as a "C" shape, that suitably accommodates a lifting device to mount battery pack module **176** within side saddle **166** of truck **100.** A distal end of vertical portion **244a** may meet a distal end of horizontal portion **246a** such that a coupling point **248a** is formed. Similarly, a distal end of vertical portion **244b** may meet a distal end of horizontal portion **246b** such that a coupling point **248b** is formed. In an alternative embodiment, lifting supports **240** may include only horizontal portions **246a, 246b** of first and second support beams **242a, 242b.**

### Mounting System

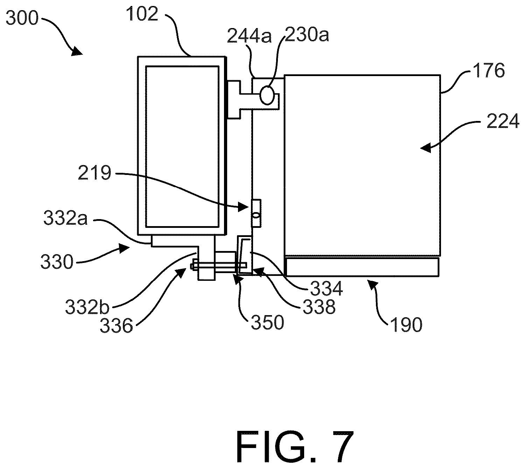

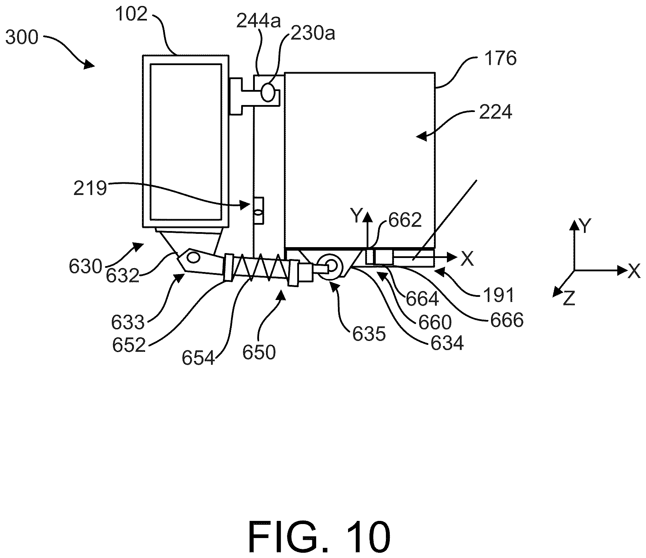

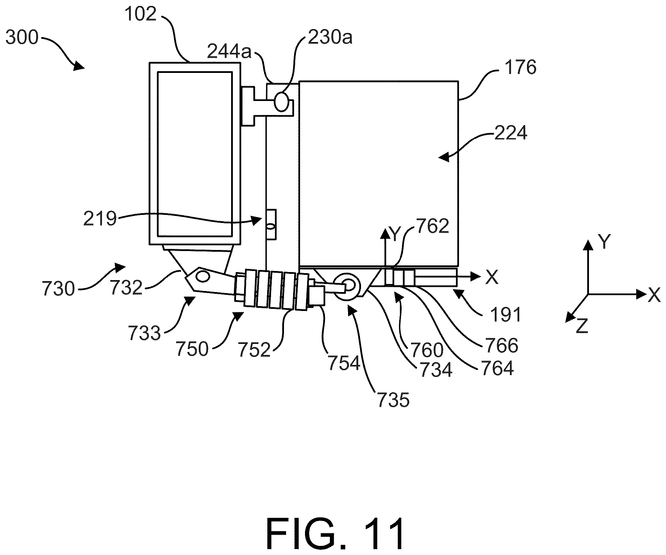

The battery pack module **176** may be removably coupled to mining truck **100** via a mounting system **300,** FIGS. **7-11****.** Mounting system **300** may include at least one top mount **230,** such as chassis mounting pins **230a, 230b** (see also FIG. **6**), a lower mount **330, 430, 530, 630, 730,** and a vibration damping element **350, 450, 550, 650, 750.** The embodiments of mounting system **300** may use either a passive damping element, such as the first, second, and third embodiments in FIGS. **7****,** **8****,** and **9****,** or an active damping element, such as the fourth and fifth embodiments in FIGS. **10** and **11****.** Each of the lower mounts **330, 430, 530, 630, 730** and each of the vibration damping elements **350, 450, 550, 650, 750** are described further herein.

### A. Top Mount

Referring briefly again to FIGS. **5A-6** in addition to FIGS. **7-11****,** the at least one top mount may be a mounting mechanism fixed on battery module **176,** such as on back panel **208** (FIGS. **5A-5C**) or on support beams **242a, 242b** (FIG. **6**), or a mounting mechanism fixed on chassis **102** of mining truck **100** (FIGS. **7-11**). In the case that the at least one top mount is fixed on chassis **102** of mining truck **100,** battery pack module **176** may include a top mount brace configured to removably couple to the at least one top mount.

Battery pack module **176** may include two top mounts to removably couple battery pack module **176** to chassis **102.** Referring specifically to FIG. **6****,** each of the two top mounts may be a chassis mounting pin **230a, 230b** fixed on a top portion/proximal end **245** of the vertical portion **244a, 244b** of the first and second support beams **242a, 242b,** respectively.

Each of chassis mounting pins **230a** and **230b** extends in a perpendicular direction away from the side **204, 206** of the battery pack module **176** and hooks into a pin receiving mount (not shown) on chassis **102** of truck **100.** Alternatively, chassis mounting pins **230a, 230b** may be coupled to a top portion of sheet metal side plates of the battery pack module **176** as discussed further in co-pending application entitled BATTERY PACK MODULE FOR HAUL TRUCK, filed the same day as the present application, and incorporated herein by reference..

### B. Lower Mount

Referring again to FIGS. **7-11****,** during operation of mining truck **100,** such as driving over terrain, loading a truck bed, or use of the engine, vibrations and oscillations may be transferred through chassis **102** into the battery pack module **176.** In some instances, these vibrations/oscillations may cause damage to battery pack module **176** and the components within the module. To mitigate damage, mounting system **300** includes a damping element **350, 450, 550, 650, 750** configured to reduce the vibrations passed from chassis **102** to module **176.** Damping element **350, 450, 550, 650, 750** may be coupled to, or otherwise part of, a lower mount **330, 430, 530, 630, 730.** By including damping element **350, 450, 550*,* 650, 750** in lower mount **330, 430, 530, 630, 730,** vibrations may be reduced to each level of battery pack layers within battery pack module **176** instead of requiring multiple dampers **350** per layer.

A lower mount **330, 430, 530, 630, 730** may extend from chassis **102** of mining truck **100** and removably couple to batter pack module **176.** Lower mount **330, 430, 530, 630, 730** may couple to an underside **190** of battery pack module **176.** Alternatively, lower mount **330, 430, 530, 630, 730** may couple to a mounting brace **219** on back panel **208.** Lower mount **330, 430, 530, 630, 730** may include a lower chassis mount or at least one lower pivot point; a vibration mitigation element such as a rubber disc, a spring, a torsion bar, and an air bag dampener; and an active damping component, such as at least one accelerometer and control unit. The lower mount may removably couple to mounting brace **219** such that vibration transferred from the mining truck into battery module **176** is reduced.

### C. Passive Damping Embodiments

Passive damping embodiments (FIGS. **7****,** **8****,** and **9**) do not require external energy input to dissipate or damp vibrations or movements. The damping rate of passive damping mounting systems **300** of the present disclosure rely on the physical and inherent properties of the vibration damping elements **350, 450, 550,** such as damping rate of the damping elements **350, 450, 550,** to reduce transfer of vibrations to battery pack module **176.**

A first embodiment of mounting system **300** is shown in FIG. **7****.** The first embodiment includes two top mounts (chassis pins **230a** and **230b**), one lower mount **330,** and damping element **350.** Lower mount **330** includes a lower chassis mount **332** that extends from chassis **102** of truck **100.** Lower chassis mount **332** may include a horizontal portion **332a** that is fixed along a surface of chassis **102** such that horizontal portion **332a** runs parallel to the surface of chassis **102.** At a first end of horizontal portion **332a,** a vertical portion **332b** extends perpendicular to chassis **102.**

Battery pack lower mount **334** may extend from back panel **208 at** mounting brace **219** or a bottom edge **338** of back panel **208.** A coupling mechanism **336** extends between vertical portion **332b** of lower chassis mount and battery pack lower mount **334.** Coupling mechanism **336** is configured to removably couple vertical portion **332b** of lower chassis mount and battery pack lower mount **334,** mounting battery pack module **176** to chassis **102.** Coupling mechanism **336** may be any suitable coupling such as mounting bolts, screws, and pins.

Between battery pack lower mount **334** and lower chassis mount **332** is a vibration damping element **350.** Vibration damping element **350** may be a rubber damper such as a rubber disk, pad, bumper, guard, and block. In some embodiments, the vibration damping element **350** may be a rubber disk filled with a viscous material, such as a gel or other fluid. As truck is operated, vibrations and oscillations travel through chassis **102** into mounting system **300** and are damped by vibration damping element **350.**

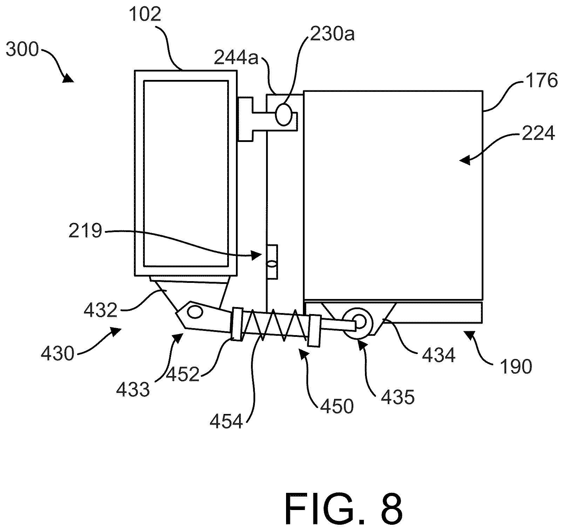

A second embodiment of mounting system **300** is shown in FIG. **8****.** The second embodiment includes two top mounts (chassis pins **230a** and **230b** (**230b** illustrated in FIG. **6**)), one lower mount **430,** and damping element **450.** Lower mount **430** includes a lower chassis mount **432** including a first pivot point **433** and a battery pack lower mount **434** including a second pivot point **435.** Lower chassis mount **432** may extend from a surface of chassis **102,** similar to lower chassis mount **332** of the first embodiment in FIG. **7****.** Battery pack lower mount **434** may extend from back panel **208** at mounting brace **219** or underside **190** of battery pack module **176.** First pivot point **433** and second pivot point **435** may allow the position of battery pack module **176** in relation to chassis **102** to be adjusted. Each pivot point **433, 435** may have an unlocked configuration in which the pivot points **433, 435** are configured to articulate in a pivoting motion up and down. The pivot points **433, 435** may have a locked configuration in which the pivot points **433, 435** are locked into position relative to chassis **102** and/or battery pack module **176** such that no articulation is possible while in the locked configuration. In some embodiments, one of pivot points **433, 435** may be in the unlocked configuration while the other of the pivot points **433, 435** is in the locked configuration. In other embodiments, both pivot points **433, 435** may be in the unlocked configuration or both pivot points **433, 435** may be in the locked configuration.

Between chassis lower mount **432** and battery pack lower mount **434** may be a vibration damping element **450.** Vibration damping element **450** may be a damper **452,** a spring isolator **454,** or a combination thereof. Suitable dampers **452** may include a twin-tube damper, a monotube damper, a torsion bar, or any other suitable fixed damper. Spring isolator **454** may be a fixed spring or an adjustable spring. In embodiments that utilize both a damper **452** and a spring isolator **454,** the spring isolator **454** may be fit over the damper **452** such that both damper **452** and spring isolator **454** are configured to absorb vibrations from operation of vehicle **100.**

Vibration damping element **450** may have a fixed damping rate depending on the configuration of the damper and/or spring isolator. The damping rate of damper **452** and spring **454** may be manually adjusted via adjustment of the spring compression, spring rate, damper shock absorber, torsion force, and other mechanisms that affect damping rate of vibration damping element **450.**

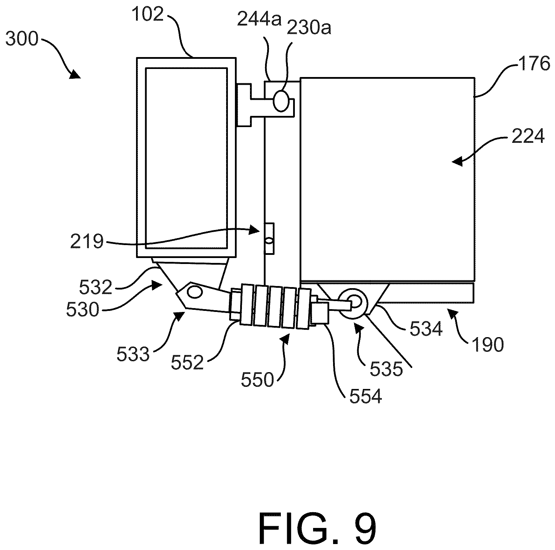

Referring to FIG. **9****,** in a third embodiment of mounting system **300,** mounting system **300** includes two top mounts (chassis pins **230a** and **230b** (**230b** illustrated in FIG. **6**)), one lower mount **530,** and damping element **550.** Lower mount **530** includes a lower chassis mount **532** may be substantially similar to the lower chassis mount **432** in the second embodiment, including a first pivot point **533** and a battery pack lower mount **534** including a second pivot point **535.**

Between chassis lower mount **532** and battery pack lower mount **534** may be a vibration damping element **550.** Vibration damping element **550** may be an air bag damper **552.** Air bag damper **552** may include a chamber filled with air fluidly connected to a valve system, including a pneumatic control valve **554,** that regulates the air pressure within the chamber. Vibrations transferred from chassis **102** to battery pack module **176** may be absorbed by air bag damper **552** as the air inside the chamber compresses to absorb the energy of the vibration or movement. The damping rate of air bag damper **552** may be manually adjusted by pneumatic control valve **554.** Increasing the pressure within air bag damper **552** using pneumatic control valve **554** creates a stiffer damping rate of vibration damping element **550.** Higher air pressure makes the air more resistant to compression, resulting in less vibration damping. Conversely, by releasing pneumatic control valve **554** and decreasing the pressure within air bag damper **552,** the air within air bag damper **552** has more room to compress, creating a greater damping rate.

### D. Active Damping Embodiments

Active damping embodiments (FIGS. **10** and **11**) actively control and adjust the damping forces in real-time to counteract vibrations, oscillations, or other unwanted movement that may be transferred to battery pack module **176.**

As shown in FIG. **10****,** a fourth embodiment of mounting system **300** includes two top mounts (chassis pins **230a** and **230b** (**230b** illustrated in FIG. **6**)), one lower mount **630,** and damping element **650.** Lower mount **630** may be substantially similar to lower mount **430.**

Between chassis lower mount **632** and battery pack lower mount **634** may be a vibration damping element **650.** Vibration damping element **650** may be a damper **652,** a spring isolator **654,** or a combination thereof, substantially similar to vibration damping element **450.** However, vibration damping element **650** may have active damping facilitated by an accelerometer module **660.** Accelerometer module **660** may include a control unit **662,** at least one accelerometer **664,** a GPS **666,** and an actuator.

The at least one accelerometer **664** is a sensor that measures acceleration forces about 6 degrees of freedom on an **X** axis, **Y** axis, and **Z** axis. The at least one accelerometer **664** may be coupled to battery pack module **176,** such as to underside of the battery pack module **190.** In an alternative embodiment, the at least one accelerometer **664** may be coupled to truck chassis **102.** In yet another embodiment, the at least one accelerometer **664** comprises a first accelerometer and a second accelerometer. The first accelerometer is coupled to battery pack module **176** and the second accelerometer is coupled to truck chassis **102.**

The readings from the at least one accelerometer **664** are sent to control unit **662** and may be used to determine vibrations, oscillations, and other movement that battery pack module **176** may be experiencing and how the damping rate of vibration damping element **650** should be adjusted to absorb the vibrations. The actuator may be configured to increase or decrease the damping rate of damper **652,** spring **654,** or a combination of both in response to the readings received by control unit **662.**

In embodiments comprising a first accelerometer coupled to battery pack module **176** and a second accelerometer coupled to truck chassis **102,** control unit **662** may compare the accelerometer signals from each of the first and second accelerometers to determine vibrations, oscillations, and other movement that battery pack module **176** may be experiencing and how the damping rate of vibration damping element **650** should be adjusted to absorb the vibrations.

A GPS **666** may collect GPS data on a location. The GPS data may comprise information on elevation, terrain, sudden curves of roadways, and other elements that may contribute to the amount of vibration transferred from chassis **102** to battery pack module **176** during operation. GPS **666** may send the GPS data to control unit **662.** Control unit **662** may process the data and create a predictive map of the location the data is taken from that includes predictions of vibrations battery pack module **176** may experience based on the GPS data. Control unit **662** may use the predictive map to determine predictive damping rates for vibration damping element **650** to minimize vibrations of battery pack module **176.**

GPS **666** may further provide a current location of truck **100.** Control unit **662** may receive the current location from GPS **666** and determine where on the predictive map truck **100** is located. For example, the predictive map may include a prediction that an increase in damping rate is necessary in a certain quadrant of the location the GPS data covers due to a paved roadway turning into a gravel roadway. The change in terrain from paved to gravel may cause an increase in vibration battery pack module **176** experiences, necessitating an increase in damping. When GPS **666** determines truck **100** is in the quadrant of the predictive map where the roadway turns to gravel, control unit **662** may send a signal to the actuator to increase the damping rate of vibration damping element **650.**

In other embodiments, control unit **662** may use GPS data received from GPS **666** to identify the speed of truck **100.** For example, control unit **662** may deduce the speed of truck **100** according to the speed at which truck **100** moves locations according to the GPS data. Control unit **662** may evaluate the vehicle speed in view of the current location of truck **100** and send a signal to the actuator to increase, decrease, or otherwise adjust the damping rate of vibration damping element 65**0** as needed in view of said vehicle speed and/or known change in the terrain surrounding vehicle **100** according to the location data provided by GPS 6**66.**

Additionally or alternatively, the relative acceleration forces identifiable according to changes in the speed of truck **100** and/or change in location of truck **100** according to the GPS data provided by GPS may contribute to shock loading and vibration of battery pack module **176.** Accordingly, control unit **662** may increase, decrease, or otherwise adjust the damping rate of vibration damping element **650** in view of such identified acceleration forces.

Accelerometer module **660** may be positioned anywhere on battery pack module **176** or lower mount **630** such that accelerometer module **660** may detect vibrations transferred to battery pack module **176.** For example, accelerometer module **660** may be coupled to underside **190** of battery pack module **176.** Alternatively, the components of the accelerometer module **660** may be coupled to different locations on the battery pack module **176** and truck chassis **102.** For example, control unit **662** may be coupled to battery pack module **176** or truck chassis **102,** the at least one accelerometer **664** may be coupled to battery pack module **176** or truck chassis **102,** and GPS **666** may be coupled to battery pack module **176** or truck chassis **102.** In other embodiments, components of accelerometer module **660** may be coupled to truck **100** at other various positions.

In some embodiments, control unit **662** may be a remote component. For example, control unit **662** may be located at a building, management site, or another location at a mining site local to but separate from truck **100.** In other embodiments, control unit **662** may be located at a more remote mining site, control center, hardware manufacturer facility, or another facility remote from truck **100.** In such embodiments, the other components of accelerator module **660** may communicate with control unit **662** via methods known in the art, such as telematics communication, 5G communication, or other communication methods which allow for communication over a particular distance, i.e., the distance between truck **100** and control unit **662.**

In various embodiments, the data collected by the at least one accelerometer **664** and/or GPS **666** may be stored to a memory accessible by control unit **662.**

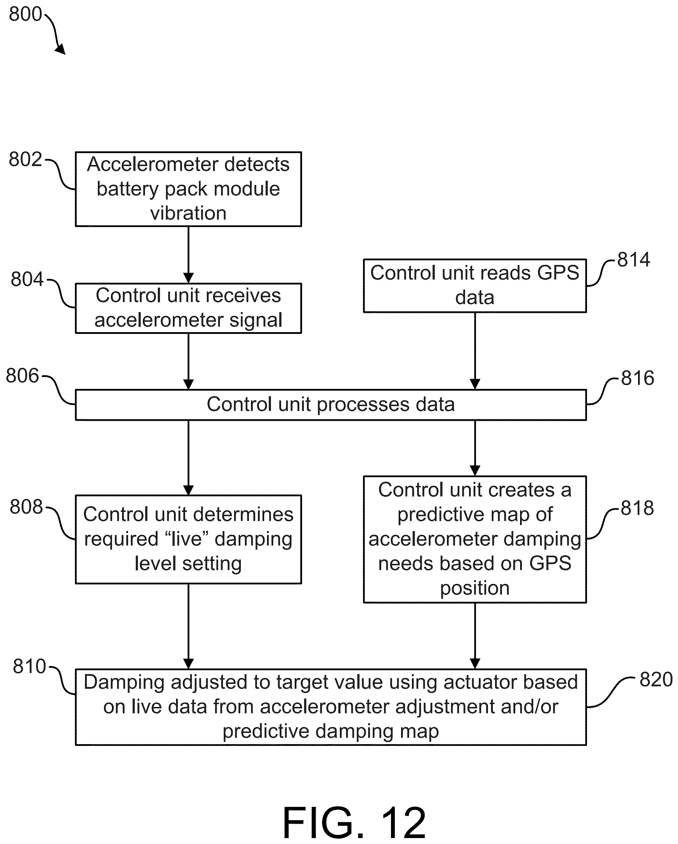

Accelerometer module **660** may use method **800** as shown in FIG. **12** to control vibration damping element **660** using active damping.

Referring to FIG. **11****,** a fourth embodiment of mounting system **300** includes two top mounts (chassis pins **230a** and **230b** (**230b** illustrated in FIG. **6**)), one lower mount **730,** and damping element **750.** Lower mount **730** may be substantially similar to lower mount **530.**

Between chassis lower mount **732** and battery pack lower mount **734** may be a vibration damping element **750.** Vibration damping element **750** may be an air bag damper **752** substantially similar to air bag damper **550** of vibration damping element **550.** However, vibration damping element **750** may have active damping facilitated by an accelerometer module **760.** Accelerometer module **760** may include a control unit **762,** at least one accelerometer **764,** a GPS **766,** and an actuator.

The at least one accelerometer **764** is a sensor that measures acceleration forces about 6 degrees of freedom on an **X** axis, **Y** axis, and **Z** axis. The at least one accelerometer **764** may be coupled to battery pack module **176,** such as to underside of the battery pack module **190.** In an alternative embodiment, the at least one accelerometer **764** may be coupled to truck chassis **102.** In yet another embodiment, the at least one accelerometer **764** comprises a first accelerometer and a second accelerometer. The first accelerometer is coupled to battery pack module **176** and the second accelerometer is coupled to truck chassis **102.**

The readings from the at least one accelerometer **764** are sent to control unit **762** and may be used to determine vibrations, oscillations, and other movement that battery pack module **176** may be experiencing and how the damping rate of vibration damping element **750** should be adjusted to absorb the vibrations. The actuator may be configured to increase or decrease the damping rate of damper **752,** spring **754,** or a combination of both in response to the readings received by control unit **762.** In embodiments comprising a first accelerometer coupled to battery pack module **176** and a second accelerometer coupled to truck chassis **102,** control unit **762** may compare the accelerometer signals from each of the first and second accelerometers to determine vibrations, oscillations, and other movement that battery pack module **176** may be experiencing and how the damping rate of vibration damping element **750** should be adjusted to absorb the vibrations.

A GPS **766** may collect GPS data on a location. The GPS data may comprise information on elevation, terrain, sudden curves of roadways, and other elements that may contribute to the amount of vibration transferred from chassis **102** to battery pack module **176** during operation. GPS **766** may send the GPS data to control unit **762.** Control unit **762** may process the data and create a predictive map of the location the data is taken from that includes predictions of vibrations battery pack module **176** may experience based on the GPS data. Control unit **762** may use the predictive map to determine predictive damping rates for vibration damping element **750** to minimize vibrations of battery pack module **176.**

GPS **766** may further provide a current location of truck **100.** Control unit **762** may receive the current location from GPS **766** and determine where on the predictive map truck **100** is located. For example, in some circumstances, the predictive map may include a prediction that an increase in damping rate is necessary in a certain quadrant of the location the GPS data covers due to a paved roadway turning into a gravel roadway. The change in terrain from paved to gravel may cause an increase in the vibration that battery pack module **176** experiences, necessitating an increase in damping. When GPS **766** determines truck **100** is in the quadrant of the predictive map where the roadway turns to gravel, control unit **762** may send a signal to the actuator to increase the damping rate of vibration damping element **750.**

In other embodiments, control unit **762** may use GPS data received from GPS **766** to identify the speed of truck **100.** For example, control unit **762** may deduce the speed of truck **100** according to the speed at which truck **100** moves locations according to the GPS data. Control unit **762** may evaluate the vehicle speed in view of the current location of truck **100** and send a signal to the actuator to increase, decrease, or otherwise adjust the damping rate of vibration damping element **750** as needed in view of said vehicle speed and/or known change in the terrain surrounding vehicle **100** according to the location data provided by GPS **766.**

Additionally or alternatively, the relative acceleration forces identifiable according to changes in the speed of truck **100** and/or change in location of truck **100** according to the GPS data provided by GPS may contribute to shock loading and vibration of battery pack module **176.** Accordingly, control unit **762** may increase, decrease, or otherwise adjust the damping rate of vibration damping element **750** in view of such identified acceleration forces.

Accelerometer module **760** may be positioned anywhere on battery pack module **176** or lower mount **730** such that accelerometer module **760** may detect vibrations transferred to battery pack module **176.** For example, accelerometer module **760** may be coupled to underside **190** of battery pack module **176.** Alternatively, the components of the accelerometer module **760** may be coupled to different locations on the battery pack module **176** and truck chassis **102.** For example, control unit **762** may be coupled to battery pack module **176** or truck chassis **102,** the at least one accelerometer **764** may be coupled to battery pack module **176** or truck chassis **102,** and GPS **766** may be coupled to battery pack module **176** or truck chassis **102.** In other embodiments components of accelerometer module **760** may be coupled to truck **100** at other various positions.

In some embodiments, control unit **762** may be a remote component. For example, control unit **762** may be located at a building, management site, or another location at a mining site local to but separate from truck **100.** In other embodiments, control unit **762** may be located at a more remote mining site, control center, hardware manufacturer facility, or another facility remote from truck **100.** In such embodiments, the other components of accelerator module **760** may communicate with control unit **762** via methods known in the art, such as telematics communication, 5G communication, or other communication methods which allow for communication over a particular distance, i.e., the distance between truck **100** and control unit **762.**

In various embodiments, the data collected by the at least one accelerometer **764** and/or GPS **766** may be stored to a memory accessible by control unit **762.**

Accelerometer module **760** may use method **800** as shown in FIG. **12** to control vibration damping element **760** using active damping.

Method **800** of FIG. **12** includes two ways to perform active damping using an accelerometer module, live active damping, and predictive active damping.

During live active damping, in a first step **802,** the accelerometer may detect battery pack module vibration. The accelerometer may send the control unit a signal of the detected vibration, step **804.** In step **806,** the control unit processes the signal. The processed signal is used to determine the required level of damping needed to reduce the vibration. In step **808,** the control unit determines the settings the vibration damping element of mounting system **300** needed to reduce the vibration. This may include increasing or decreasing air pressure, spring tension, spring compression, spring rate, torsion force, or any other mechanism the vibration damping element uses to absorb vibrations. Finally, in step **810,** control unit sends a signal to an actuator to adjust the damping rate of the vibration damping element to the determined setting. By reacting to vibrations live, method **800** provides mounting system **300** the ability to react to changes in the level of vibration damping required to avoid damage to battery pack module **176.**

During predictive active damping, in a first step **814,** the control unit reads GPS data of a desired area in which mining truck **100** may be used. The GPS data collected by the control unit may relate to changes in elevation, terrain, sudden curves of roadways, and other elements that may contribute to the amount of vibration transferred from chassis **102** to battery pack module **176** during operation. The control unit may then process the data, step **816.** The processed data, in step **818,** may then be used to create a predictive map of the desired area that includes necessary damping rates to accommodate for the elements of the area that may cause vibrations of battery pack module **176.** For example, the predictive map may include a prediction that an increase in damping rate is necessary in a certain quadrant of the desired area due to a paved roadway turning into a gravel roadway. Finally, in step **820,** during operation of mining truck **100,** the control module uses the GPS to determine where mining truck **100** is positioned on the predictive map and signals the actuator to adjust the damping rate of the vibration damping element based on the previously made prediction in step **818.** By using the predictive active damping, mounting system **300** may be prepared to adjust the damping rate of vibration damping elements preemptively based on the predictive map created by the control module.

While this disclosure has been described as having an exemplary design, the present disclosure may be further modified within the spirit and scope of this disclosure. This application is therefore intended to cover any variations, uses, or adaptations of the disclosure using its general principles. For example, features of any of the embodiments may be provided in combination with any other embodiment. Further, this application is intended to cover such departures from the present disclosure as come within known or customary practices in the art to which this disclosure pertains.

### ASPECTS

Aspect 1 is a vibration damping mounting system configured to mount a battery pack module to a chassis of a vehicle, comprising: a top mount coupled to the battery pack module; a lower mount coupled to at least one of a mounting brace on a back panel of the battery pack module and an underside of the battery pack module; and a vibration damping element coupled to the lower mount.

Aspect 2 is the vibration damping mounting system of Aspect 1, wherein the lower mount comprises a lower chassis mount that extends from the chassis of the vehicle, and a lower battery pack mount that extends from at least one of the mounting brace on the back panel of the battery pack module and the underside of the battery pack module.

Aspect 3 is the vibration damping mounting system of Aspect 2, wherein each of the lower chassis mount and the lower battery pack mount comprise a pivot point configured to articulate such that a position of the battery pack module changes in relation to the vehicle chassis.

Aspect 4 is the vibration damping mounting system of any one of Aspects 1-3, wherein the top mount comprises a chassis mounting pin.

Aspect 5 is the vibration damping mounting system of any one of Aspects 1-4, wherein the vibration damping element is one of a damper and a torsion bar.

Aspect 6 is the vibration damping mounting system of any one of Aspects 1-4, wherein the vibration damping element includes a spring.

Aspect 7 is the vibration damping mounting system of Aspect 6, wherein the vibration damping element includes a spring and a damper.

Aspect 8 is the vibration damping mounting system of any one of Aspects 1-4, wherein the vibration damping element is an air bag damper.

Aspect 9 is the vibration damping mounting system of Aspect 8, wherein the air bag damper comprises a pneumatic valve, the pneumatic valve controls a damping rate of the air bag damper.

Aspect 10 is the vibration damping mounting system of any one of Aspects 1-9, wherein the vibration damping element is a passive damping element with a fixed damping rate.

Aspect 11 is the vibration damping mounting system of any one of Aspects 1-4, wherein the vibration damping element is a rubber damper.

Aspect 12 is the vibration damping mounting system of Aspect 11, wherein the rubber damper is one of a disk, a pad, a bumper, a guard, and a block.

Aspect 13 is the vibration damping mounting system of either Aspect 11 or Aspect 12, wherein the rubber damper is filled with viscous material.

Aspect 14 is a vibration damping mounting system configured to mount a battery pack module to a chassis of a vehicle, comprising: a top mount coupled to the battery pack module; a lower mount coupled to at least one of a mounting brace on a back panel of the battery pack module and an underside of the battery pack module; a vibration damping element coupled to the lower mount; an accelerometer module, the accelerometer module comprising: an accelerometer configured to determine forces of acceleration on the battery pack module about 6 degrees of freedom on an X, Y and Z axis; an actuator configured to increase or decrease a damping rate of the vibration damping element; and a control unit configured to receive signals from the accelerometer and transmit a command to the actuator.

Aspect 15 is the vibration damping mounting system of Aspect 14, wherein the accelerometer module further comprising a GPS module configured to collect GPS data.

Aspect 16 is the vibration damping mounting system of Aspect 15, wherein the GPS data comprises at least one of: a change in elevation terrain, a sudden curve in a roadway, a speed of the vehicle, and a location of the vehicle.

Aspect 17 is the vibration damping mounting system of either Aspect 15 or Aspect 16, wherein the control unit is further configured to receive the GPS data from the GPS and create a predictive map based on the GPS data.

Aspect 18 is the vibration damping mounting system of any of Aspects 14-17, wherein the control unit is positioned on the vehicle.

Aspect 19 is the vibration damping mounting system of any of Aspects 14-17, wherein the control unit is positioned remotely from the vehicle.

Aspect 20 is the vibration damping mounting system of Aspect 19, wherein the accelerometer and the actuator are positioned on the vehicle.

Aspect 21 is a method of controlling a vibration damping system of a battery pack module using live active damping, comprising: transmitting an accelerometer signal from an accelerometer to a control unit; wherein the accelerometer transmits a signal indicating vibration along 6 degrees of freedom on an X, Y, and Z axis; processing the accelerometer signal from the accelerometer using the control unit to determine how much vibration damping is necessary to dampen the vibration of the battery pack module; and transmitting a damping rate signal from the control unit to an actuator; and adjusting a damping rate of a vibration damping element by actuating the actuator such that the damping rate of the vibration damping element damps the vibration of the battery pack module.

Aspect 22 is the method of Aspect 21, further comprising: transmitting GPS data to a control unit; creating a predictive map of predicted vibration of the battery pack module based on the GPS data; locating the position of the battery pack module on the predictive map; and adjusting the damping rate of the vibration damping element using the actuator based on the position of the battery pack module on the predictive map such that vibration to the battery pack module is minimized.

Aspect 23 is the method of Aspect 22, wherein GPS data comprises information related to at least one of: a change in elevation, a terrain, a sudden curve in a roadway, and a speed of the vehicle.

Aspect 24 is the method of any one of Aspects 21-23, wherein adjusting the damping rate comprises the actuator adjusting a pneumonic valve of an air bag vibration damping element to increase or decrease a damping rate of the air bag vibration damping element.

Aspect 25 is the method of any one of Aspects 21-24, wherein adjusting a damping rate comprises the actuator adjusting at least one of spring compression, spring rate, torsion force, and damper shock absorbance to increase or decrease a damping rate of the vibration damping element.

Features of any of the above aspects may be provided in combination with any other aspect.

## Claims

1. A vibration damping mounting system (300) configured to mount a battery pack module (176) to a chassis of a vehicle, comprising:
a top mount (230) coupled to the battery pack module;
a lower mount (330, 430, 530, 630, 730) coupled to at least one of a mounting brace on a back panel of the battery pack module and an underside of the battery pack module; and
a vibration damping element (350, 450, 550, 650, 750) coupled to the lower mount.

2. The vibration damping mounting system of claim 1, wherein the lower mount comprises a lower chassis mount that extends from the chassis of the vehicle, and a lower battery pack mount that extends from at least one of the mounting brace on the back panel of the battery pack module and the underside of the battery pack module.

3. The vibration damping mounting system of claim 2, wherein each of the lower chassis mount and the lower battery pack mount comprise a pivot point configured to articulate such that a position of the battery pack module changes in relation to the vehicle chassis.

4. The vibration damping mounting system of any of the preceding claims, wherein:
the top mount comprises a chassis mounting pin; and/or
the vibration damping element is one of a damper and a torsion bar; and/or
the vibration damping element includes a spring; and/or
the vibration damping element includes a spring and a damper; and/or
the vibration damping element is an air bag damper, wherein the air bag damper optionally comprises a pneumatic valve, the pneumatic valve controlling a damping rate of the air bag damper; and/or
the vibration damping element is a passive damping element with a fixed damping rate; and/or
the vibration damping element is a rubber damper, wherein the rubber damper optionally is one of a disk, a pad, a bumper, a guard, and a block, and wherein the rubber damper optionally is filled with viscous material.

5. The vibration damping mounting system of any of the preceding claims, further comprising:
an accelerometer module, the accelerometer module comprising:
an accelerometer configured to determine forces of acceleration on the battery pack module about 6 degrees of freedom on an X, Y and Z axis;
an actuator configured to increase or decrease a damping rate of the vibration damping element; and
a control unit configured to receive signals from the accelerometer and transmit a command to the actuator.

6. The vibration damping mounting system of claim 5, wherein the accelerometer module further comprises a GPS module configured to collect GPS data.

7. The vibration damping mounting system of claim 6, wherein the GPS data comprises at least one of: a change in elevation terrain, a sudden curve in a roadway, a speed of the vehicle, and a location of the vehicle.

8. The vibration damping mounting system of either claim 6 or 7, wherein the control unit is further configured to receive the GPS data from the GPS and create a predictive map based on the GPS data.

9. The vibration damping mounting system of any of claims 5 to 8, wherein the control unit is positioned on the vehicle.

10. The vibration damping mounting system of any of claims 5 to 8, wherein the control unit is positioned remotely from the vehicle, and optionally wherein the accelerometer and the actuator are positioned on the vehicle.

11. A method of controlling a vibration damping system of a battery pack module using live active damping, comprising:
transmitting an accelerometer signal from an accelerometer to a control unit;
wherein the accelerometer transmits a signal indicating vibration along 6 degrees of freedom on an X, Y, and Z axis;
processing the accelerometer signal from the accelerometer using the control unit to determine how much vibration damping is necessary to dampen the vibration of the battery pack module;
transmitting a damping rate signal from the control unit to an actuator; and
adjusting a damping rate of a vibration damping element by actuating the actuator such that the damping rate of the vibration damping element damps the vibration of the battery pack module.

12. The method of claim 11, further comprising:
transmitting GPS data to a control unit;
creating a predictive map of predicted vibration of the battery pack module based on the GPS data;
locating the position of the battery pack module on the predictive map; and
adjusting the damping rate of the vibration damping element using the actuator based on the position of the battery pack module on the predictive map such that vibration to the battery pack module is minimized.

13. The method of claim 12, wherein GPS data comprises information related to at least one of: a change in elevation, a terrain, a sudden curve in a roadway, and a speed of the vehicle.

14. The method of any of claims 11-13, wherein adjusting the damping rate comprises the actuator adjusting a pneumonic valve of an air bag vibration damping element to increase or decrease a damping rate of the air bag vibration damping element.

15. The method of any of claims 11-14, wherein adjusting a damping rate comprises the actuator adjusting at least one of spring compression, spring rate, torsion force, and damper shock absorbance to increase or decrease a damping rate of the vibration damping element.
